# EUROPEAN PATENT SPECIFICATION

(11) **EP 2 764 770 B1**
(45) Date of publication and mention of the grant of the patent: **15.11.2017**
(21) Application number: 14152591.5
(22) Date of filing: 27.01.2014
(51) Int. Cl.: A01K 1/015

(54) **Floor element for a stall floor provided with a slot grid**
Bodenelement für einen Stallboden mit einem Schlitzgitter
Élément de plancher pour sol de blocage avec grille

(30) Priority: 08.02.2013 NL 2010282
(43) Date of publication of application: 13.08.2014
(73) Proprietor: Lauka Holding B.V., 5591 JL Heeze (NL)
(72) Inventor: Swaans, Johannes Hermanus Cornelis Henricus, 5591 PW Heeze (NL)
(74) Representative: Verhees, Godefridus Josephus Maria

(56) References cited:
- EP-A1- 2 108 254
- DE-U1-202005 020 849
- DE-U1-202012 104 304

## Description

### Field of the invention

The invention relates to a floor element for a stall floor, having a walking surface and an underside situated opposite to this walking surface, two ends opposite to each other and two sides, as well as a urine drainage slot grid provided in the walking surface and comprising main slots which are running parallel to each other and to the sides of the floor element and extend from one of the ends to the other end of the floor element and are sloping towards at least one end, and transverse slots located between the main slots and extending from one of the main slots to a neighbouring main slot.

### State of the art

A floor element of this type is known from EP-A-2108254. The floor element known from this publication has two longitudinal sides located opposite to each other beside which, when used in a stall floor, neighbouring floor elements are present at a small distance. The slot grid present in the walking surface has transverse slots which extend transversely to the longitudinal sides and are sloping from one of the longitudinal sides to the other longitudinal side and end up in the openings between two neighbouring floor elements for discharging manure and urine to a manure cellar underneath.

### Summary of the invention.

It is an object of the invention to provide a floor element of the type defined in the opening paragraph with which urine can be discharged in a better and faster manner. For this purpose the floor element according to the invention is characterized in that the main slots have recesses at their ends which recesses extend over the entire thickness of the floor element, and in that the main slots are sloping from the middle towards the two ends. By having the main slots slope from the middle towards the two ends, the bottoms of the main slots while being at a similar minimum and maximum depth may provide a larger slope than in the case where the slots are sloping from one end to the other. Slots having a larger slope lead to a better and faster discharge of urine to the manure cellar built underneath the floor elements and thereby lead to less gas emission.

The hole is situated at the abutting surface of two neighbouring and abutting floor elements, where in each of the nine abutting sides a part of the hole is present. This provides that the holes can be formed in a simpler manner than if they are present in the middle of the main slots. The recesses are preferably oblong and extend in longitudinal direction in the main slots. The recesses are preferably as wide as the width of the main slots.

An embodiment of the floor element according to the invention is characterized in that all transverse slots are arranged at a similar angle unequal to 90 degrees relative to the main slots, where alternately two neighbouring transverse slots are running from the main slots towards each other and away from each other, and where from pairs of transverse slots located opposite to each other on either side of the main slots, the transverse slots of a pair are running towards each other from the main slot onwards and the transverse slots of the opposite pair are running away from each other from the main slot onwards. It has turned out that as a result of this alternating orientation of the transverse slots, these transverse slots can be cleaned better by a manure slide moved over them.

An embodiment of the floor element according to the invention is characterized in that the ends of the two opposite transverse slots discharging into the main slots are staggered relative to each other. This measure provides that the urine can flow faster from the transverse slots into the main slots.

For also having the transverse slots as steep made steepest possible they are preferably running, just like the main slots are, from the middle of the transverse slots in both directions to the main slots.

For removing the manure from the walking surface in a simpler and better manner, and also rendering the walking surface less slippery at the same time and thus improving the walkability, a further embodiment of the floor element according to the invention is characterized in that grooves are located between the transverse slots, which grooves are running parallel to the main slots. These grooves are preferably shallower than the transverse slots and have a constant depth over their entire length.

Furthermore, the walking surface is preferably flat and extends in horizontal direction when the floor element is used in a stall floor. As a result, the cows can walk over the floor elements in an simple manner and there is only a slight chance of them slipping.

### Brief description of the drawings

The following description relating to the appended drawings, the whole given by way of non-limiting example of the floor elements according to the invention installed in a stall floor, will provide better understanding of how the invention can be realised, in which:

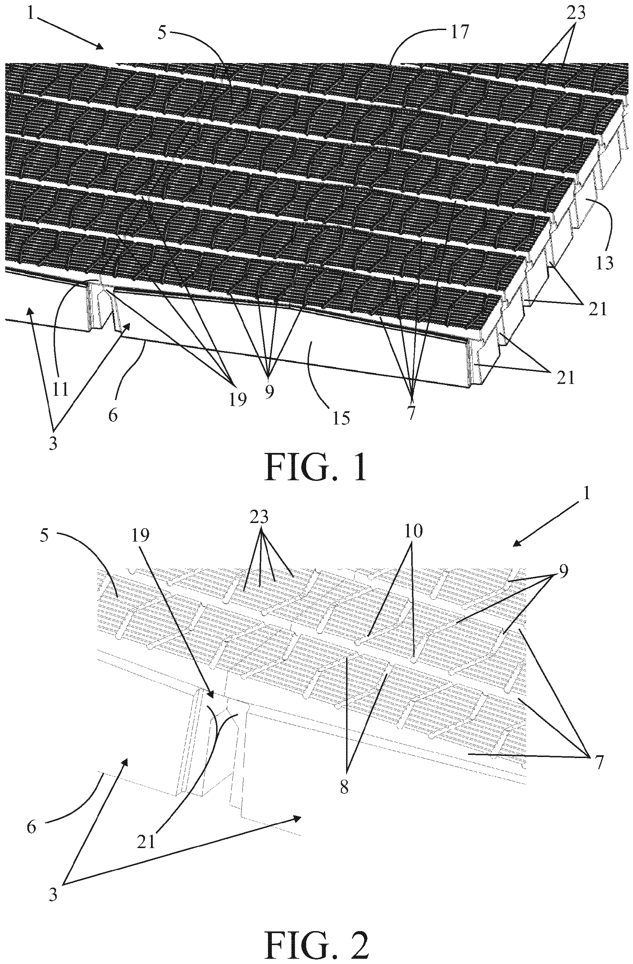

Fig. 1 shows a perspective view of a plurality of abutting floor elements according to the invention;
Fig. 2 shows a detail of Fig. 1 in the place of two abutting floor elements;
Fig. 3 shows a top view of the floor elements shown in Fig. 1;
Fig. 4 shows a detail of Fig. 3 in the place of two abutting floor elements;

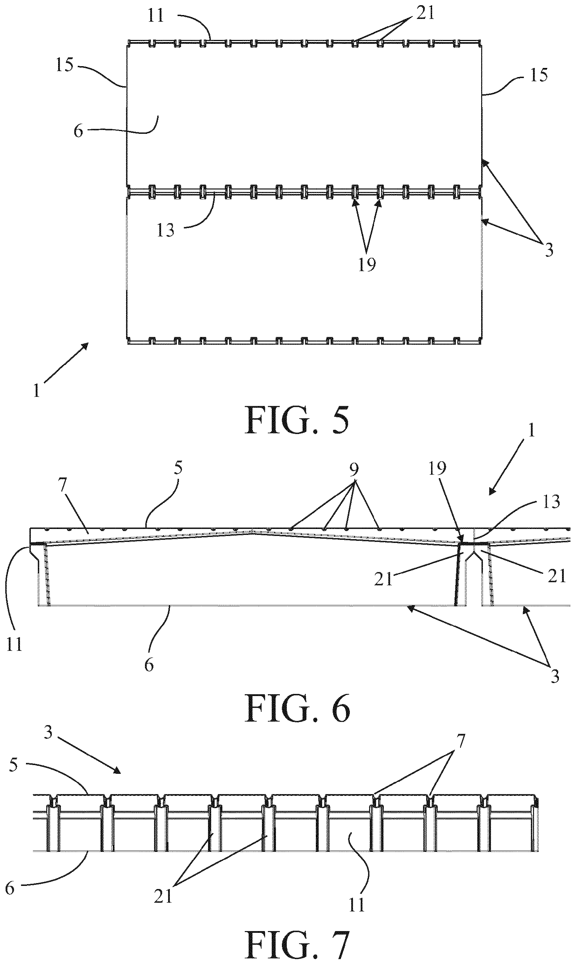

Fig. 5 shows a bottom view of two floor elements shown in Fig. 1;
Fig. 6 shows a side view of two floor elements shown in Fig. 1; and
Fig. 7 shows a front view of one of the floor elements shown in Fig. 1.

### Detailed description of the drawings

The Figures show the parts of a stall floor 1 formed by floor elements 3 according to the invention in various views. The floor elements are rectangular and have a walking surface 5 at the top which is flat and has a grid of slots 7 and 9 for the discharge of urine. The floor element has two ends 11 and 13 opposite each other and two sides 15 and 17.

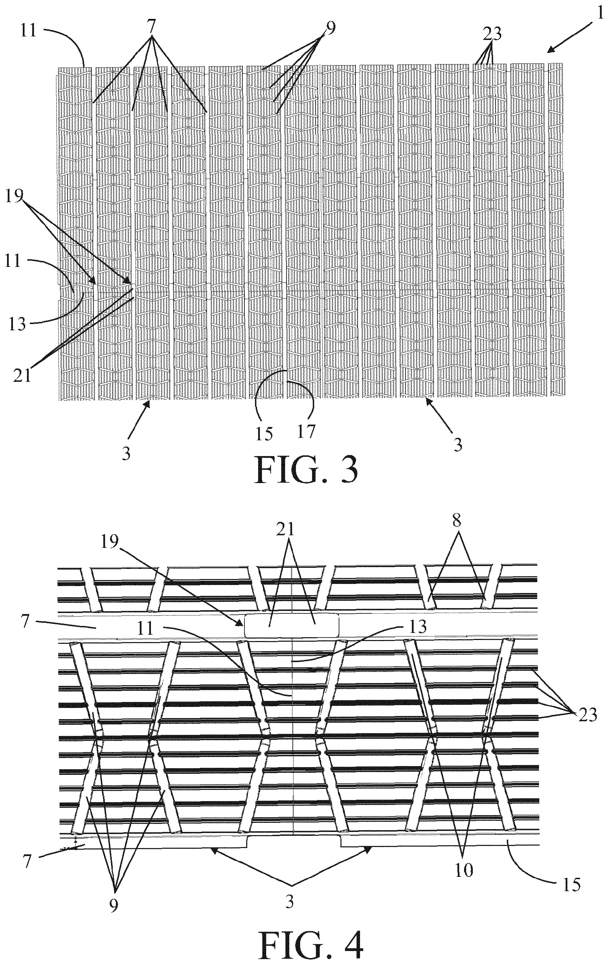

The stall floor 1 has holes 19 in it for discharging urine to a manure cellar underneath the stall floor 1. These holes 19 are each formed by two oblong recesses 21 which extend from the ends of the floor elements 3 in longitudinal direction of the main slots 7. The recesses extend from the walking surface 5 of the floor element (worded differently, from the bottom of the main slot, see Fig. 3) to the bottom 6 of the floor element.

The slot grid comprises main slots 7 running parallel to each other and to the sides 15 and 17 of the floor element and, located between the main slots, transverse slots extending from one of the main slots to a neighbouring main slot. The main slots 7 are sloping from the middle of the main slots to the two ends, and the transverse slots 9 are sloping from the middle of the transverse slots to the main slots.

All transverse slots 9 are arranged at a similar angle unequal to 90 degrees relative to the main slots 7, where alternately two neighbouring transverse slots are running from the main slots towards each other and away from each other. From pairs of transverse slots 9 opposite to each other on either side of the main slots 7, the transverse slots of one pair 8 are running from the main slot towards each other whereas the transverse slots of the opposite pair 10 are running away from each other from the main slot onwards.

The ends 9a of two transverse slots 9 opposite to each other are staggered relative to each other, so that the urine flowing from the transverse slots into the main slots does not flow into the main slot at one spot. As a result, the urine flows faster from the transverse slots into the main slots.

The transverse slots 9 are surrounded by grooves 23 which run parallel to the main slots 7. These grooves 23 are shallower than the transverse slots 9 and have a constant depth over their entire length.

Albeit the invention has been described in the foregoing based on the drawings, it should be observed that the invention is not by any manner or means restricted to the embodiment shown in the drawings. The invention also extends to all embodiments deviating from the embodiment shown in the drawings within the scope defined by the claims.

## Claims

1. A floor element (3) for a stall floor (1), having a walking surface (5) and an underside (6) situated opposite to this walking surface, two ends (11, 13) opposite to each other and two sides (15, 17), as well as a urine drainage slot grid (7, 9) provided in the walking surface and comprising main slots (7) which are running parallel to each other and to the sides (5, 17) of the floor element and extend from one of the ends (11) to the other end (13) of the floor element and are sloping towards at least one end, and transverse slots (9) located between the main slots and extending from one of the main slots to a neighbouring main slot, **characterized in that** the main slots (7) have recesses (21) at their ends which recesses extend over the entire thickness of the floor element (3), and **in that** the main slots (7) are sloping from the middle towards the two ends (11, 13).

2. A floor element (3) as claimed in claim 1, **characterized in that** the recesses (21) are oblong and extend in longitudinal direction in the main slots (7).

3. A floor element (3) as claimed in claim 1 or 2, **characterized in that** all transverse slots (9) are arranged at a similar angle unequal to 90 degrees relative to the main slots (7), where alternately two neighbouring transverse slots are running from the main slots towards each other and away from each other, and where from pairs of transverse slots (8, 10) located opposite to each other on either side of the main slots, the transverse slots (9) of one pair are running towards each other from the main slot (7) onwards and the transverse slots of the opposite pair are running away from each other from the main slot onwards.

4. A floor element (3) as claimed in claim 3, **characterized in that** the ends of the two opposite transverse slots (9) discharging into the main slots (7) are staggered relative to each other.

5. A floor element (3) as claimed in any one of the preceding claims, **characterized in that** the transverse slots (9) are sloping from the middle of the transverse slots in both directions to the main slots (7).

6. A floor element (3) as claimed in any one of the preceding claims, **characterized in that** grooves (23) are located between the transverse slots (9) which grooves are running parallel to the main slots (7).

7. A floor element (3) as claimed in claim 6, **characterized in that** the grooves (23) are shallower than the transverse slots (9) and have a constant depth over their entire length.

8. A floor element (3) as claimed in any one of the preceding claims, **characterized in that** the walking surface (5) is flat.

## Patentansprüche

1. Bodenelement (3) für einen Stallboden (1) mit einer Lauffläche (5) und einer demgegenüber liegenden Unterseite (6), zwei einander gegenüber liegenden Enden (11, 13) und zwei Seiten (15, 17), sowie einer Spaltenstruktur (7, 9) in der Lauffläche zum Abfluss von Urin, mit Hauptspalten (7), die parallel zu einander und zu den Seiten (15, 17) des Bodenelements verlaufen und sich von einem Ende (11) bis zum anderen Ende (13) des Bodenelements erstrecken und mindestens bis zu einem Ende verlaufen, und mit zwischen den Hauptspalten befindlichen Querspalten (9), die sich von einer der Hauptspalten bis zu einer benachbarten Hauptspalte erstrecken, **dadurch gekennzeichnet, dass** an die Enden grenzende Aussparungen (21) in den Hauptspalten (7) vorhanden sind, die sich über die gesamte Dicke des Bodenelements (3) erstrecken, und dass die Hauptspalten (7) von der Mitte bis zu den beiden Enden (11, 13) verlaufen.

2. Bodenelement (3) gemäß Anspruche 1, **dadurch gekennzeichnet, dass** die Aussparungen (21) länglich sind und sich in Längsrichtung zu den Hauptspalten (7) erstrecken.

3. Bodenelement (3) gemäß Anspruch 1 oder 2, **dadurch gekennzeichnet, dass** alle Querspalten (9) in gleichem Winkel ungleich 90 Grad in Bezug zu den Hauptspalten (7) angeordnet sind, wobei abwechselnd zwei benachbarte Querspalten von den Hauptspalten zueinander und voneinander verlaufen, und wobei beidseitig von den Hauptspalten einander gegenüber liegende Paare (8, 10) von Querspalten die Querspalten (9) eines Paares von der Hauptspalte (7) ab aufeinander zulaufen und die Querspalten vom gegenüberliegenden Paar ab der Hauptspalte voneinander verlaufen.

4. Bodenelement (3) gemäß Anspruch 3, **dadurch gekennzeichnet, dass** die in die Hauptspalten (7) auslaufenden Enden der zwei einander gegenüber liegenden Querspalten (9) in Bezug zueinander versetzt sind.

5. Bodenelement (3) gemäß einer der vorhergehenden Ansprüche, **dadurch gekennzeichnet, dass** die Querspalten (9) von der Mitte der Querspalten in beiden Richtungen zu den Hauptspalten (7) verlaufen.

6. Bodenelement (3) gemäß einer der vorhergehenden Ansprüche, **dadurch gekennzeichnet, dass** zwischen den Querspalten (9) Schlitze (23) vorhanden sind, die parallel zu den Hauptspalten (7) verlaufen.

7. Bodenelement (3) gemäß Anspruch 6, **dadurch gekennzeichnet, dass** die Schlitze (23) nicht so tief wie die Querspalten (9) sind und über die gesamte Länge eine konstante Tiefe aufweisen.

8. Bodenelement (3) gemäß einer der vorhergehenden Ansprüche, **dadurch gekennzeichnet, dass** die Lauffläche (5) eben ist.

## Revendications

1. Elément de sol (3) pour le sol d'une étable, écurie ou porcherie (1), pourvu d'une bande de roulement (5) et d'un côté inférieur (6) situé en face de celle-ci, de deux extrémités (11, 13) se trouvant l'une en face de l'autre et de deux côtés (15, 17), ainsi que d'une répartition de rainures (7, 9) se trouvant dans la bande de roulement pour l'évacuation d'urine, comprenant des rainures principales (7) qui sont parallèles l'une à l'autre et se trouvent sur les côtés (15, 17) de l'élément de sol et s'étendent d'une des extrémités (11) vers l'autre extrémité (13) de l'élément de sol et aboutissent vers au moins une des extrémités, et comprenant des rainures transversales (9) se trouvant entre les rainures principales et s'étendant d'une des rainures principales jusqu'à une rainure principale contiguë, **caractérisé en ce qu'**aux extrémités, des encoches (21) adjacentes se trouvent dans les rainures principales (7) et s'étendent sur toute l'épaisseur de l'élément de sol (3), et **en ce que** les rainures principales (7) aboutissent vers les deux extrémités (11, 13) depuis le milieu.

2. Elément de sol (3) selon la revendication 1, **caractérisé en ce que** les encoches (21) sont de forme allongée et s'étendent dans le sens longitudinal dans les rainures principales (7).

3. Elément de sol (3) selon la revendication 1 ou 2, **caractérisé en ce que** toutes les rainures transversales (9) forment un angle identique différent de 90 degrés par rapport aux rainures principales (7), où deux rainures transversales contiguës aboutissent alternativement l'une vers l'autre et l'une loin de l'autre depuis les rainures principales, et où, pour les paires (8, 10) de rainures transversales se trouvant l'une en face de l'autre des deux côtés des rainures principales, les rainures transversales (9) d'une paire se dirigent l'une vers l'autre depuis la rainure principale (7) et les rainures transversales de la paire se trouvant en face se dirigent l'une loin de l'autre depuis la rainure principale.

4. Elément de sol (3) selon la revendication 3, **caractérisé en ce que** les extrémités des deux rainures transversales (9) se trouvant l'une en face de l'autre et débouchant dans les rainures principales (7), sont décalées l'une par rapport à l'autre.

5. Elément de sol (3) selon une des revendications précédentes, **caractérisé en ce que** les rainures transversales (9) aboutissent vers les rainures principales (7) depuis le milieu des rainures transversales dans les deux sens.

6. Elément de sol (3) selon une des revendications précédentes, **caractérisé en ce que** des sillons (23) étant parallèles aux rainures principales (7) se trouvent entre les rainures transversales (9).

7. Elément de sol (3) selon la revendication 6, **caractérisé en ce que** les sillons (23) sont moins profondes que les rainures transversales (9) et ont une profondeur constante sur toute la longueur.

8. Elément de sol (3) selon une des revendications précédentes, **caractérisé en ce que** la bande de roulement (5) est plate.
